# EUROPEAN PATENT SPECIFICATION

(11) **EP 2 045 132 B1**
(45) Date of publication and mention of the grant of the patent: **20.06.2012**
(21) Application number: 08016123.5
(22) Date of filing: 12.09.2008
(51) Int. Cl.: B60R 1/00

(54) **Driving support device, driving support method, and computer program**
Antriebshilfsvorrichtung, Antriebshilfsverfahren und Computerprogramm
Dispositif de support de commande, procédé de support de commande, et programme informatique

(30) Priority: 02.10.2007 JP 2007258641
(43) Date of publication of application: 08.04.2009
(73) Proprietor: Aisin AW Co., Ltd., Fujii-cho Anjo-shi, Aichi 444-1192 (JP)
(72) Inventor: Okabe, Hidefumi, Okazaki-shi, Aichi 444-8564 (JP); Kokuryuu, Tomoyuki, Okazaki-shi, Aichi 444-8564 (JP); Takagi, Minoru, Okazaki-shi, Aichi 444-8564 (JP)
(74) Representative: Kramer - Barske - Schmidtchen

(56) References cited:
- WO-A1-2006/027563
- JP-A- 2006 290 304
- US-A1- 2003 108 222
- US-A1- 2003 151 563
- US-A1- 2005 168 695

## Description

### BACKGROUND OF THE INVENTION

### 1. Field of the Invention

The present invention relates to a driving support device, a driving support method and a computer program for compensating a visibility in a direction of blind spot seen from a vehicle.

### 2. Description of the Related Art

In recent years, along with the popularization of navigation systems, there has been increasing a number of vehicles mounting thereon image display systems displaying peripheral circumstances of a vehicle on display devices in vehicle interiors. As peripheral circumstances of a vehicle, for example, positions of other vehicles, states of obstacles, road markings such as a center line and a stop line, and the like can be cited.

Here, there exists a region for a vehicle where a driver cannot visually recognize peripheral circumstances, which is, a so-called blind spot region. For example, regions at a rear of a vehicle, in a direction of a front pillar, under a front bumper, and the like exist as the blind spot regions for the vehicle. Usually, it is difficult for a driver to recognize such a state of the blind spot region, which was one of the causes for delaying the recognition that people or obstacles come close to the vehicle. Accordingly, in order to assist the driver, the peripheral circumstances in these blind spot regions are captured by an imaging device such as a camera set on the vehicle, and displayed on a display device set in the vehicle interior while the vehicle is traveling or stopped.

For instance, a technique for shooting a scenery including blind spots generated by pillars which support a ceiling of a vehicle using cameras set on door mirrors, performing a correction of an image based on the shot data, coordinates of an eyeball of a driver, coordinates of the pillars, coordinates of the cameras and a shooting direction, and displaying the corrected image on each of the pillars using a projector is disclosed in, for example, Japanese Patent Application Publication No. JP-A-2005-184225 (pages 8 to 11, FIG. 6).

WO 2006/027563 A1 relates to a view enhancing system for a vehicle comprising an imaging unit adapted for capturing an image of peripheral environments of the vehicle, a travelling state obtaining unit adapted for obtaining a travelling state of the vehicle, an image extracting unit adapted for extracting an image from the captured image based on the travelling state of the vehicle, the extracted image corresponding to a blind spot region of the vehicle after a predetermined period of time, and an image outputting unit adapted for outputting the extracted image.

US 2005/168695 A1 relates to a vehicular visual assistance system for enhancing safety of driving a vehicle by eliminating a blind spot due to a pillar that obstructs the vision of a vehicle driver.

US 2003/151563 A1 reduces blind spots in various situations by using display screen surfaces to cover objects that are opaque or objects which it is difficult to see through.

US 2003/108222 A1 relates to an imaging processing system for a vehicle for generating an image which displays a blind spot for a driver.

JP 2006-290304 A relates to a method and a device for displaying the outside of a vehicle capable of projecting the ever-changing outside scene on a real-time basis by performing an established image processing on an inner surface of a pillar without providing any unnatural impression, for rapidly and correctly performing a driving system.

### SUMMARY OF THE INVENTION

However, in the technique disclosed in the aforementioned Japanese Patent Application Publication No. JP-A-2005-184225, there is generated a time lag between a point in time when capturing the image by the camera and a point in time when displaying the captured image on the respective pillars. Specifically, to conduct an image capturing processing by the camera, an image processing on the captured image, and a displaying processing on the respective pillars, there is required at least more than a certain period of time, so that it is impossible to display the image captured by the camera at the same timing as the image was captured on the pillars. Therefore, the image actually displayed becomes an image of a region different from the blind spot region seen from the driver. As a result, actual blind spot regions and image regions displayed on the respective pillars become different, which could lead the driver to make erroneous judgments.

The present invention has been made to solve the aforementioned problems of the related art, and an object thereof is to provide a driving support device, a driving support method and a computer program capable of accurately displaying an actual blind spot region of a vehicle even when a time lag is generated between a point in time when capturing an image and a point in time when displaying the captured image on a display or the like, by extracting an image corresponding to the blind spot region of the vehicle after a predetermined period of time from the captured image that was captured and outputting it.

According to a driving support device of a first aspect structured as above, it becomes possible to accurately display an actual blind spot region of a vehicle even when a time lag is generated between, for example, a point in time when capturing an image and a point in time when displaying the captured image on a display or the like, by extracting an image corresponding to the blind spot region of the vehicle after a predetermined period of time from the captured image that was captured and outputting it. Accordingly, actual peripheral circumstances of the vehicle and peripheral circumstances of the vehicle displayed on the display or the like are not different to each other, which enables a driver to make appropriate judgments.

With the use of a driving support device according to a second aspect, since a position of a vehicle after a predetermined period of time is predicted, and a blind spot region from the position is calculated, it becomes possible to appropriately extract an image in which peripheral circumstances of the vehicle after the predetermined period of time is captured, from a captured image.

With the use of a driving support device according to a third aspect, by considering a time lag generated between a point in time when capturing an image and a point in time when outputting the captured image, it becomes possible to appropriately display peripheral circumstances of a vehicle at a current time point at which the image is displayed, without making actual peripheral circumstances of the vehicle and peripheral circumstances of the vehicle displayed on a display or the like different to each other.

With the use of a driving support device according to a fourth aspect, since an image corresponding particularly to a blind spot region generated by a pillar of a vehicle is displayed on the inside of the pillar i.e., an interior surface of the pillar, a driving environment is improved without reducing a visibility of a driver. Further, by visually recognizing the projected image, the driver can more accurately grasp a state of an object located in the blind spot.

With the use of a driving support method according to a fifth aspect, it becomes possible to accurately display an actual blind spot region of a vehicle even when a time lag is generated between, for example, a point in time when capturing an image and a point in time when displaying the captured image on a display or the like, by extracting an image corresponding to the blind spot region of the vehicle after a predetermined period of time from the captured image that was captured and outputting it. Accordingly, actual peripheral circumstances of the vehicle and peripheral circumstances of the vehicle displayed on the display or the like are not different to each other, which enables a driver to make appropriate judgments.

With the use of a computer program according to a sixth aspect, it becomes possible to accurately display an actual blind spot region of a vehicle even when a time lag is generated between, for example, a point in time when capturing an image and a point in time when displaying the captured image on a display or the like, by extracting an image corresponding to the blind spot region of the vehicle after a predetermined period of time from the captured image that was captured and outputting it. Accordingly, actual peripheral circumstances of the vehicle and peripheral circumstances of the vehicle displayed on the display or the like are not different to each other, which enables a driver to make appropriate judgments.

### BRIEF DESCRIPTION OF THE DRAWINGS

FIG. 1 is an exterior view of a vehicle 2 mounting thereon a driving support device according to the present embodiment;
FIG. 2 is a block diagram schematically showing a control system of the driving support device according to the present embodiment;
FIG. 3 is a view showing a setting example of a camera;
FIG. 4 is a schematic view showing a projecting structure of a projector;
FIG. 5 is a view showing a right front pillar of a vehicle;
FIG. 6 is a flow chart of an image projection processing program according to the present embodiment;
FIG. 7 is a view showing a change in a blind spot region of a vehicle when the vehicle goes straight;
FIG. 8 is a view showing a change in a blind spot region of a vehicle when the vehicle turns right;
FIG. 9 is a view showing a change in a blind spot region of a vehicle when the vehicle turns left;
FIG. 10 is a view showing an image range to be extracted in step 5; and
FIG. 11 is a view showing a scenery within the sight seen from a driver's seat of a vehicle after a projection processing of an image is conducted in step 7.

### DETAILED DESCRIPTION OF THE PREFERRED EMBODIMENTS

Hereinafter, a driving support device according to the present invention will be specifically described based on a concrete embodiment with reference to the drawings. Here, a driving support device 1 according to the present embodiment described hereinbelow is a device in which an image corresponding to a blind spot region of a vehicle is captured by a camera set on a vehicle outer wall and displayed to a driver in the vehicle, and in the present embodiment, a blind spot region generated by a front pillar of the vehicle is particularly targeted as the blind spot region of the vehicle. Further, as a method of displaying the image corresponding to the blind spot region, the one of projecting the image on the inside (i.e. interior side of the vehicle) of the front pillar by a projector is particularly applied in the present embodiment.

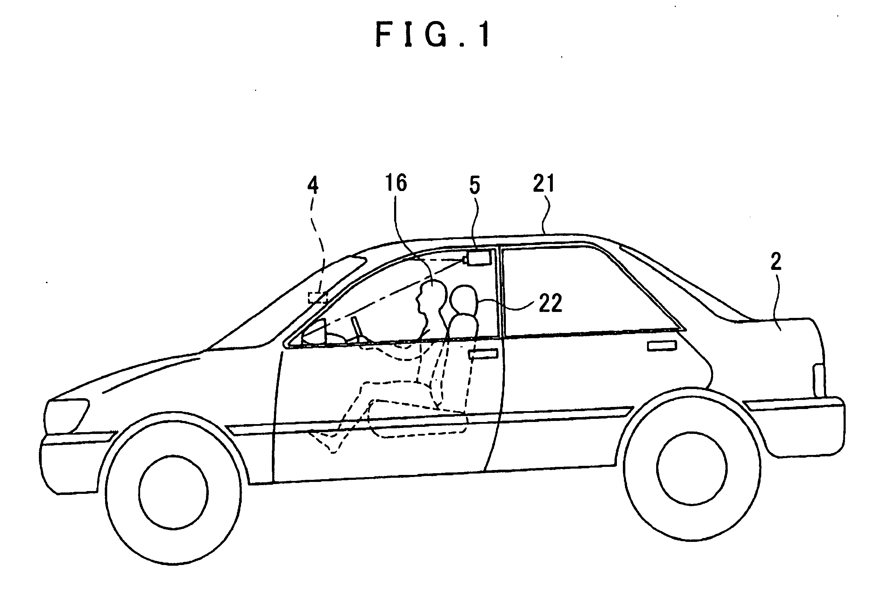

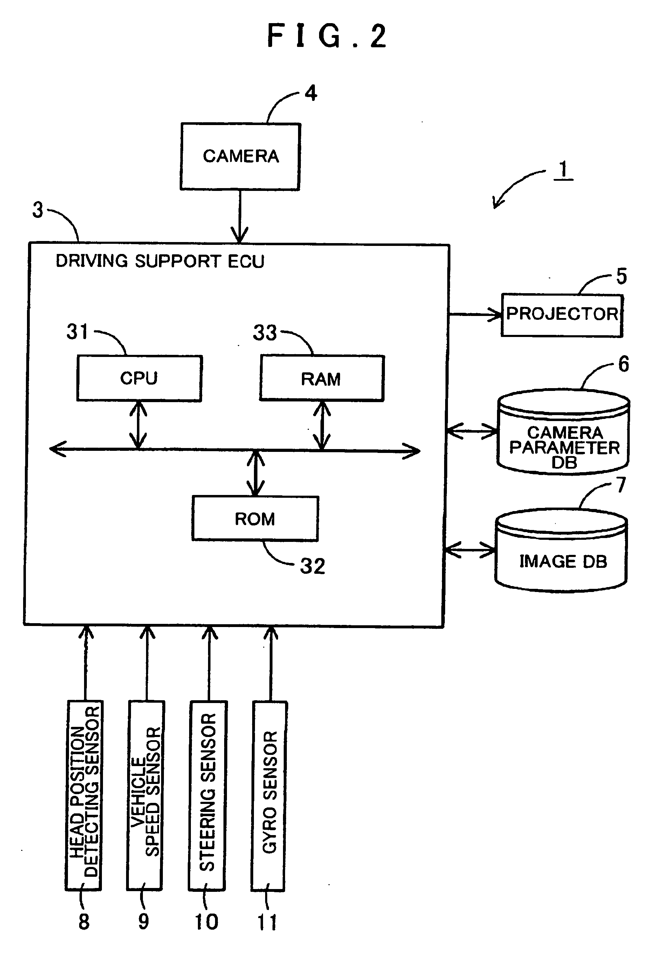

First, a schematic structure of the driving support device 1 according to the present embodiment will be described using FIG. 1 and FIG. 2. FIG. 1 is an exterior view of a vehicle 2 mounting thereon the driving support device 1 according to the present embodiment, and FIG. 2 is a block diagram schematically showing a control system of the driving support device 1 according to the present embodiment.

As shown in FIG. 1 and FIG. 2, the driving support device 1 according to the present embodiment has a driving support ECU (a traveling state obtaining unit, an image extracting unit, an image outputting unit, a position predicting unit, and a blind spot region calculating unit) 3, a camera (imaging unit) 4, a projector 5, a camera parameter DB 6, an image DB 7, a head position detecting sensor 8, a vehicle speed sensor 9, a steering sensor 10, and a gyro sensor 11 set to the vehicle 2.

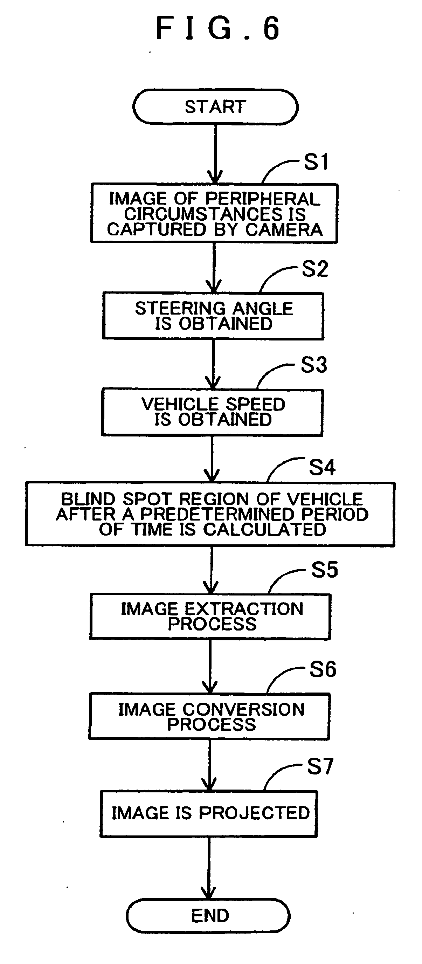

The driving support ECU (electronic control unit) 3 is an electronic control unit which extracts an image corresponding especially to a blind spot region generated by a right front pillar 12 from a captured image captured by the camera 4, and projects the extracted image on the inside of the right front pillar 12 using the projector 5, to thereby perform an image projection processing (refer to FIG. 6) and the like. Note that the driving support ECU 3 may also serve as an ECU used for controlling a navigation device. A specific structure of the driving support ECU 3 will be described later.

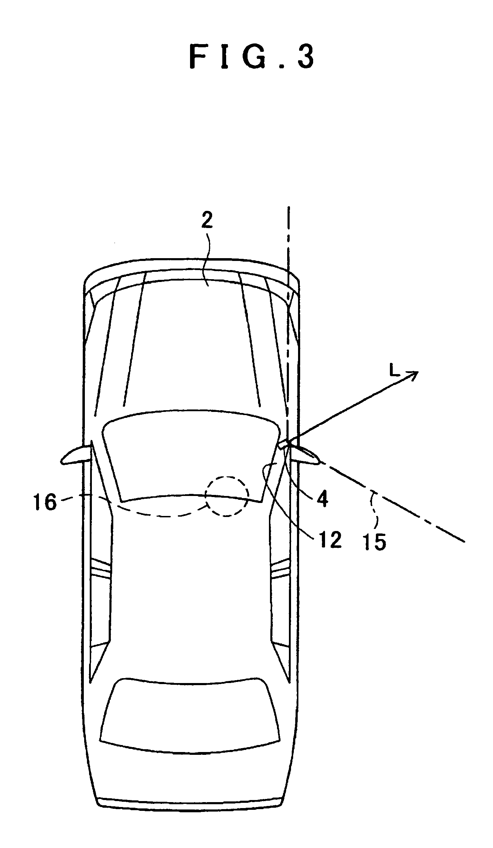

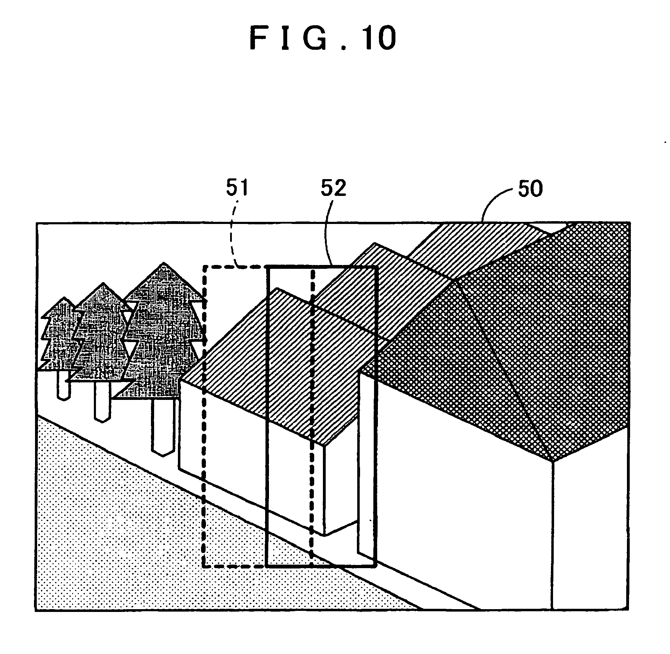

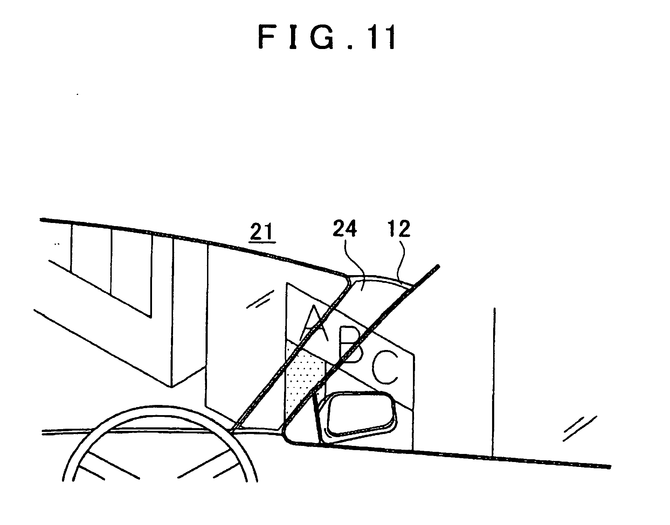

The camera 4 is one in which a fixed imaging element such as a CCD, for instance, is used, and is attached to the outside of the right front pillar 12 of the vehicle 2 with its optical axis direction L set to be directed downward by a predetermined angle with respect to a horizontal direction. Further, as shown in FIG. 3, the optical axis direction L of the camera 4 is directed in a right forward direction of the vehicle 2, and within a predetermined range around the optical axis direction L as a center is set as a captured region 15 in which an image of peripheral environments can be captured by the camera 4. The camera 4 captures an image in the right forward direction of the vehicle 2 when the vehicle 2 travels or stops, and the captured image that was captured (refer to FIG. 10) is once stored in the image DB 7. Thereafter, as will be described later, a range image corresponding to the blind spot region generated by the right front pillar 12 is extracted from the captured image, and projected on the inside of the right front pillar 12 by the projector 5 (refer to FIG. 11). Note that in the present embodiment, the optical axis direction L is set to be the same direction as a visual recognition direction of the right front pillar 12 seen from a driver 16 (namely, a direction of the blind spot region generated by the right front pillar 12 seen from the driver 16).

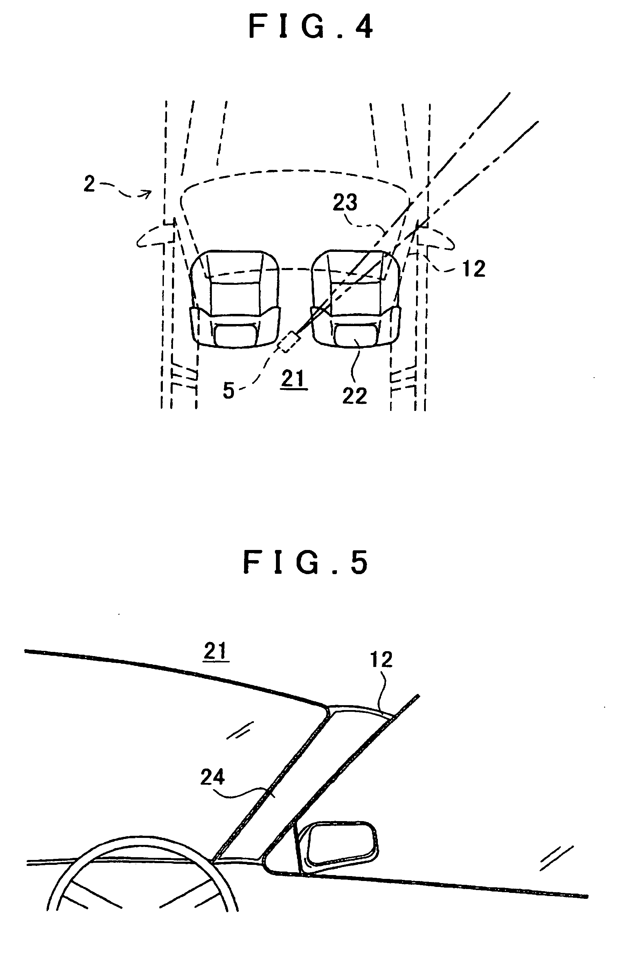

The projector 5 is a so-called liquid crystal projector formed of a liquid crystal panel and a light source used for projection. In the driving support device 1 according to the present embodiment, the projector 5 projects the image in which the blind spot region generated by the right front pillar 12 is captured on the inside of the right front pillar 12. Here, FIG. 4 is a schematic view showing a projecting structure of the projector 5, and FIG. 5 is a front view showing the inside of the right front pillar 12.

As shown in FIG. 1 and FIG. 4, the projector 5 is set inside of a roof 21 and in the vicinity of above in the vertical direction of a front seat 22 to be seated by the driver 16. Further, as shown in FIG. 5, a screen 24 cut in accordance with the shape of the pillar adheres to the inside surface of the right front pillar 12. Furthermore, a focal point of the projector 5 is adjusted to the screen 24 such that a projection range of the projector 5 is set to match with a projection plane to be projected of the screen 24. As will be described later, by projecting the image using the projector 5, an image which is seen through the right front pillar 12 is displayed on the right front pillar 12 generating the blind spot region of the vehicle 2 (refer to FIG. 11). Note that instead of the liquid crystal projector, a DLP projector and an LCOS projector may be applied as the projector 5. Further, when the inside surface of the right front pillar 12 is formed of a material and a shape with which a clear image can be displayed by receiving projection light output from the projector 5, the screen 24 may be omitted.

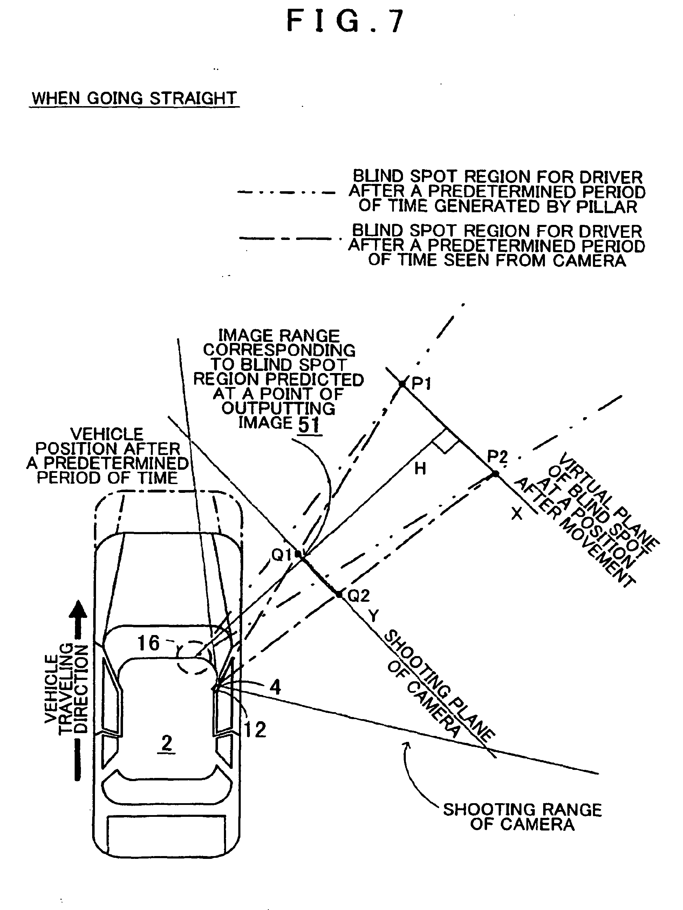

The camera parameter DB 6 is a storage unit storing various parameters regarding the camera 4. For instance, in the present embodiment, the camera parameter DB 6 stores information regarding a setting position, a setting angle, an imaging range, a shooting plane of camera (refer to FIG. 7) and the like of the camera 4 with respect to the vehicle 2. The driving support ECU 3 extracts the image corresponding to the blind spot region generated by the right front pillar 12 from the captured image captured by the camera 4 using the various parameters stored in the camera parameter DB 6.

Meanwhile, the image DB 7 is a storage unit storing the captured image captured by the camera 4. The driving support ECU 3 performs a predetermined image processing on the captured image stored in the image DB 7, to thereby produce projection data to be projected by the projector 5.

The head position detecting sensor 8 is formed of a plurality of ultrasonic sensors, and attached in the periphery of the driver 16 seated in the front seat 22 in the interior of the vehicle 2 at a position substantially the same height as the head part of the driver 16 or at a slightly higher position thereof. When an ultrasonic wave transmitted from the head position detecting sensor 8 reflects off the head part of the driver 16, the driving support ECU 3 measures a period of time from when the ultrasonic wave is transmitted to when a reflected wave is received, to thereby detect the position of the head part. Subsequently, in the present embodiment, the driving support ECU 3 calculates the blind spot region of the vehicle based on a detection result from the head position detecting sensor 8.

The vehicle speed sensor 9 being a sensor for detecting a moving distance and a vehicle speed of the vehicle generates pulses in accordance with a rotation of wheels of the vehicle 2, and outputs pulse signals to the driving support ECU 3. Subsequently, by counting the number of generated pulses, the driving support ECU 3 calculates a rotation speed of the wheels and the moving distance.

The steering sensor 10 is a sensor attached to the inside of a steering device and capable of detecting a pivot angle of the steering.
The gyro sensor 11 is a sensor capable detecting a turn angle of the vehicle 2. Further, by integrating the turn angle detected by the gyro sensor 11, it is possible to detect a vehicle direction.

Next, a detailed description regarding the driving support ECU 3 will be made using FIG. 2. The driving support ECU 3 is formed of a CPU 31 as a core, in which a ROM 32 and a RAM 33 being storage units are connected to the CPU 31. The ROM 32 stores a later-described image projection processing program (refer to FIG. 6), and other than that, various programs and the like needed for controlling the camera 4, the projector 5 and the like. Further, the RAM 33 is a memory temporarily storing various data operated in the CPU 31.

Subsequently, the image projection processing program to be executed by the driving support ECU 3 of the driving support device 1 according to the present embodiment structured as above will be explained based on FIG. 6. FIG. 6 is a flow chart of the image projection processing program according to the present embodiment. Here, the image projection processing program is repeatedly executed at every predetermined period of time (every 200 ms, for instance) after an ignition of the vehicle 2 is turned on or after a predetermined operation is performed by a user with an operation panel (not shown), and performs processing to extract the image corresponding especially to the blind spot region generated by the right front pillar 12 from the captured image captured by the camera 4 when the vehicle 2 travels or stops, and to project the extracted image on the inside of the right front pillar 12 using the projector 5. Note that programs to be described below shown by the flow chart in FIG. 6 are stored in the ROM 32 and the RAM 33 included in the driving support ECU 3, and are executed by the CPU 31.

In the image projection processing program, in step (hereinafter, abbreviated as S) 1, the CPU 31 first captures an image of peripheral environments in a right forward direction in a traveling direction of a vehicle using the camera 4, to thereby obtain a captured image. Subsequently, the obtained captured image is temporality stored in the image DB 7.

Next, in S2, the CPU 31 obtains a steering angle of the vehicle based on the detection result from the steering sensor 10. Further, in S3, the CPU 31 obtains a vehicle speed of the vehicle based on the detection result from the vehicle speed sensor 9. Note that the aforementioned S2 and S3 correspond to processes conducted by the traveling state obtaining unit.

Subsequently, in S4, the CPU 31 predicts a vehicle position after a predetermined period of time using the traveling state of the vehicle obtained in the aforementioned S2 and S3, and further calculates a blind spot region of the vehicle located at the predicted position. Note that the predetermined period of time is a required period of time from the capturing of the image of the peripheral environments using the camera 4 to the output of the captured image using the projector 5 (namely, the display of the captured image on the screen 24), and a value thereof is determined depending on the performance of the camera 4 and the CPU 31. For instance, the value is set at 100 ms in the present embodiment.

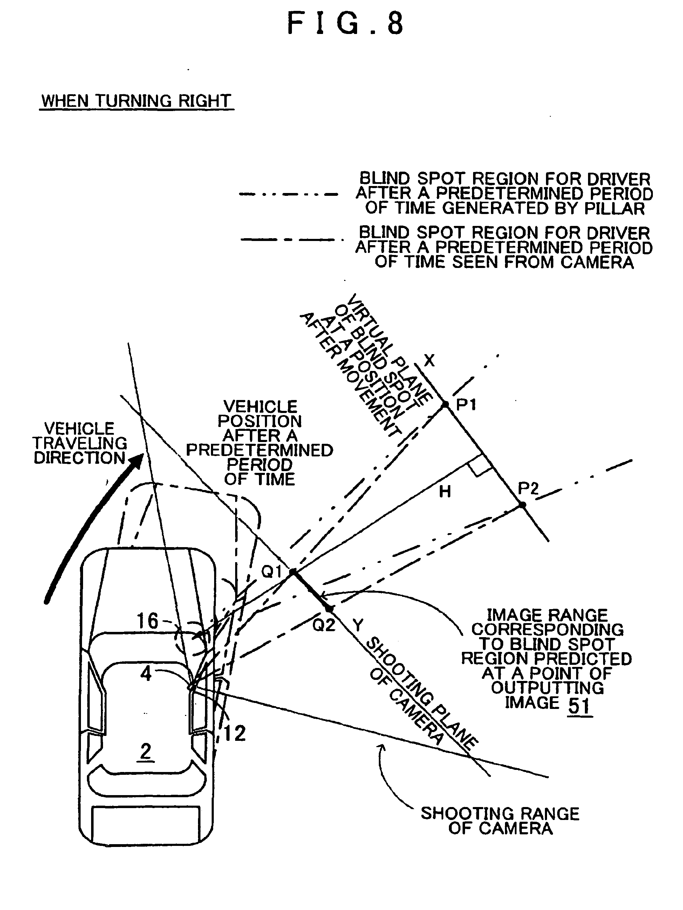

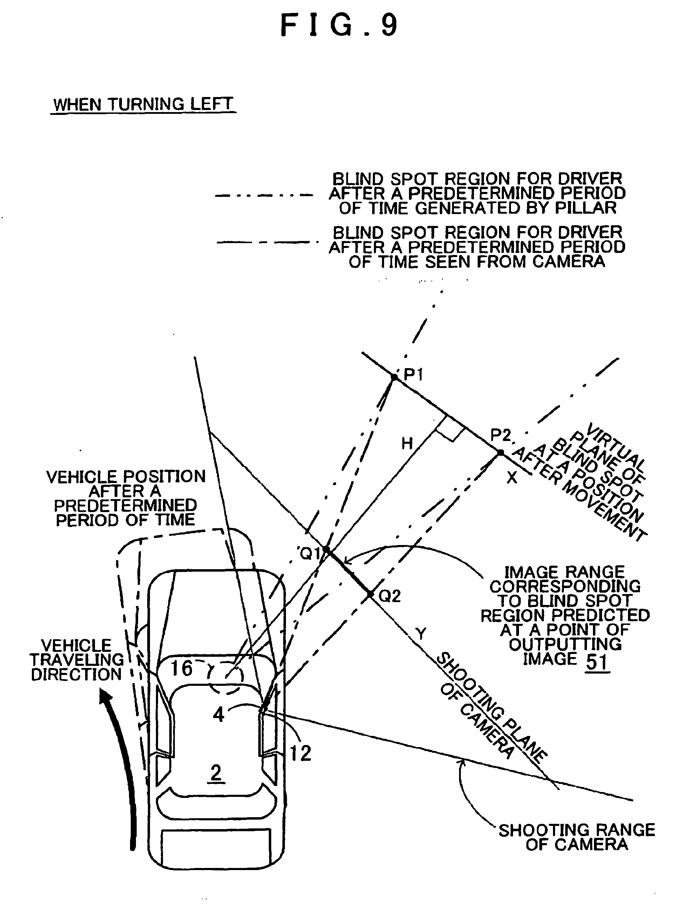

Hereinafter, a calculation processing of the blind spot region of the vehicle after the predetermined period of time (namely, at the point in time when displaying the captured image) to be executed in the aforementioned S4 will be specifically described using FIG. 7 to FIG. 9. Note that FIG. 7 shows a case where the vehicle 2 goes straight, FIG. 8 shows a case where the vehicle 2 turns right, and FIG. 9 shows a case where the vehicle 2 turns left.
First, in S4, the CPU 31 detects the head position of the driver 16 using the head position detecting sensor 8. Next, the CPU 31 predicts the vehicle position after the predetermined period of time based on the traveling state of the vehicle obtained in the aforementioned S2 and S3. Further, based on the predicted vehicle position, the CPU 31 predicts the head position of the driver 16 after the predetermined period of time.
Subsequently, based on the prediction result of the head position of the driver 16 after the predetermined period of time and the position and the shape of the right front pillar 12 with respect to the head position of the driver 16, the CPU 31 calculates the blind spot region for the driver 16 after the predetermined period of time generated by the right front pillar 12. Note that as shown in FIG. 7 to FIG. 9, the blind spot region for the driver 16 generated by the right front pillar 12 at the position after the predetermined period of time (namely, at a point where the captured image is displayed) from when the vehicle exists at the current position (namely, at a spot where the captured image was captured) becomes respectively different regions depending on a traveling trace of the vehicle. Further, the aforementioned S4 corresponds to processes conducted by the position predicting unit and the blind spot region calculating unit.

Thereafter, in S5, the CPU 31 specifies a range of the image corresponding to the blind spot region calculated in the aforementioned S4 among the captured image captured in the aforementioned S1, and extracts the specified range of image. Here, FIG. 10 is a view showing a captured image 50 captured by the camera 4.

Hereinafter, an extraction processing of the image to be executed in the aforementioned S5 will be specifically described using FIGS. 7 to 10.
First, in S5, the CPU 31 sets a virtual plane X after the predetermined period of time based on the blind spot region for the driver 16 after the predetermined period of time generated by the right front pillar 12 calculated in the aforementioned S4, as shown in FIG. 7 to FIG. 9. Here, the virtual plane X is a plane for correcting a mismatch between the visibility of the camera 4 and the visibility of the driver 16, and is a virtual surface set in accordance with the visibility of the driver in which the visibility of the driver 16 is determined as the origin. Note that the virtual plane X is orthogonal to a line H joining a predicted head position of the driver 16 and a center of the right front pillar 12, and is set at a position with a predetermined distance (10 m, for instance) apart from the vehicle 2.
Thereafter, the CPU 31 obtains a shooting plane of camera Y. Note that the shooting plane of camera Y is previously determined based on a design value (a resolution, a setting angle with respect to a vehicle body, and so on) and the like of the camera 4, and is stored in the camera parameter DB 6. Further, the camera 4 focuses on the shooting plane of camera Y to capture the image in the aforementioned S1.
Subsequently, the CPU 31 calculates overlap regions P1 to P2 between the blind spot region for the driver 16 after the predetermined period of time calculated in the aforementioned S4 and the virtual plane X. Further, the CPU 31 calculates a visibility region in which the calculated overlap regions P1 to P2 match with the visibility of the camera 4 (namely, the blind spot region for the driver after the predetermined period of time seen through the camera), and specifies regions Q1 to Q2 in which the calculated visibility region and the shooting plane of camera Y overlap as an image range 51 corresponding to the blind spot region of the vehicle 2 after the predetermined period of time (point in time when displaying the captured image).
Subsequently, an image in the specified image range 51 is extracted from the captured image 50, as shown in FIG. 10.
Note that an image range 52 corresponding to a blind spot region of the vehicle 2 at the current (namely, at a point in time when capturing the image with the camera) position is also shown in FIG. 10. As shown in FIG. 10, the image range to be extracted is a region different from the blind spot region of the vehicle 2 at the current position, so that it is possible to accurately extract the actual blind spot region of the vehicle at the point in time when outputting the image. Further, the aforementioned S4 and S5 correspond to processes conducted by the image extracting unit.

Next, in S6, the CPU 31 performs a projection conversion of the image extracted in the aforementioned S5 to project it on the virtual plane, thereby generating projection data.

Hereinafter, an image conversion processing to be executed in the aforementioned S6 will be specifically explained using FIG. 7 to FIG. 9.
First, in S6, the CPU 31 performs the projection conversion of the image extracted in the aforementioned S5 to project it on the virtual plane X. Note that the projection conversion is a process for performing a coordinate transformation in which coordinates of each pixel of the image existing in the image range 51 among the shooting plane of camera Y are transformed to those of each pixel of the virtual plane X, and is conducted by using a publicly known coordinate transformation.
Further, the image being projection-converted on the virtual plane X is converted in accordance with the shape of the right front pillar 12 stored in the ROM 32, and the converted image is further coordinate-transformed in accordance with the position of the projector 5 so as to be projected by the projector 5. Here, the image to be displayed on the inside surface of the right front pillar 12 is distorted, enlarged or reduced depending on an angle by which the light output from the projector 5 is incident to the inside surface of the pillar. Therefore, for example, a map or the like in which the coordinates of the respective pixels of the projection-converted image and the coordinates of the respective pixels of the image to be output to the projector 5 are previously correlated with each other is previously stored in a memory or the like, and based on the map, the projection-converted image is further coordinate-transformed to be an output image to the projector 5. Subsequently, the coordinate-transformed image is set as projection data to be output to the projector 5.

After that, in S7, the CPU 31 outputs the generated projection data using the projector 5, thereby projecting the image of the region being blocked by the pillar on the screen 24 set on the inside surface of the right front pillar 12. At this time, the projected image displayed on the screen 24 is projection-converted on the virtual plane X, so that the projected image is displayed without being deviated or inclined from a background visually recognized through a front window or a door window, as shown in FIG. 11. Therefore, even when an object such as a person and an approaching vehicle exists in a position hidden by the right front pillar 12, the driver 16 of the vehicle 2 can easily grasp the existence. Further, the image seen through the right front pillar 12 generating the blind spot is formed with more realistic formation, which enables the driver to more accurately grasp the state of the object located in the blind spot. Note that the aforementioned S7 corresponds to processes conducted by the image outputting unit.

As has been described above in detail, in the driving support device 1, the driving support method conducted by the driving support device 1, and the computer program executed in the driving support device 1 according to the present embodiment, the image of the peripheral environments of the vehicle 2 is captured by the camera 4 (S1), the traveling state of the vehicle 2 is obtained (S2 and S3), the blind spot region seen from the driver generated by the right front pillar 12 after the predetermined period of time is calculated by considering the time lag until the captured image captured by the camera 4 is projected by the projector 5 (S4), the image corresponding to the calculated blind spot region is extracted from the captured image captured by the camera 4 (S5), and the extracted image is projected on the inside surface of the right front pillar 12 using the projector 5 (S7), so that even when the time lag is generated between the point in time when capturing the image and the point in time when displaying the captured image, it becomes possible to accurately display the actual blind spot region of the vehicle. Accordingly, the actual peripheral circumstances of the vehicle 2 and the peripheral circumstances of the vehicle displayed on the inside surface of the right front pillar 12 are not different to each other, which enables the driver to make appropriate judgments.
Further, since the position of the vehicle 2 after the predetermined period of time is predicted, and the blind spot region from the position is calculated, it becomes possible to appropriately extract the image in which the peripheral circumstances of the vehicle 2 after the predetermined period of time is captured, from the captured image.
Furthermore, since the image corresponding to the blind spot region generated by the right front pillar 12 of the vehicle 2 is displayed on the inside of the right front pillar 12, a driving environment is improved without reducing the visibility of the driver. Further, by performing the projection conversion on the virtual plane X, it becomes possible to form the image seen through the right front pillar 12 generating the blind spot with more realistic formation. Therefore, by visually recognizing the projected image, the driver can more accurately grasp the state of the object located in the blind spot.

Note that it is needless to say that the present invention is not limited to the aforementioned embodiment, and various improvements and modifications may be made without departing from the scope of the present invention.
For example, the present embodiment is structured such that the image corresponding to the blind spot region generated by the right front pillar 12 is projected on the inside surface of the right front pillar 12 using the projector 5 to thereby compensate the visibility in the blind spot seen from the vehicle, but, it may be structured such that the image corresponding to the blind spot region is displayed on a display set on the inside surface of the pillar in the vehicle to thereby compensate the visibility in the blind spot seen from the vehicle.

Further, the image projection processing program (FIG. 6) may be executed only when the vehicle 2 approaches within a predetermined distance of an intersection or a curve. At this time, it is preferable to determine whether the vehicle 2 approaches within the predetermined distance of the intersection or the curve by performing a map matching process with the navigation device. Further, the image projection processing program may be executed under the situation where the recognition of the peripheral environments becomes important such as an entrance/exit of a parking lot and a merging road in an expressway, in addition to the intersection and the curve.

Further, in the present embodiment, the blind spot region generated by the right front pillar 12 at a side of the driver is displayed on the inside surface of the right front pillar 12, but, it is possible to display a blind spot region generated by a left front pillar at a side of a front passenger's seat. In such a case, it is structured such that the camera is set on the left front pillar, and an image extracted from a captured image range is displayed on the inside surface of the left front pillar.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support device, comprising:
an imaging unit (4) adapted for capturing an image of peripheral environments of a vehicle (2);
a travelling state obtaining unit (3) adapted for obtaining a travelling state of the vehicle (2) based on a sensor (9,10,11) for detecting a vehicle direction and either a moving distance or a vehicle speed of the vehicle (2), the sensor (9,10,11) being installed on the vehicle (2);
**characterized by**;
a position predicting unit for predicting a position of the vehicle (2) located after a predetermined period of time based on the travelling state of the vehicle (2);
a blind spot region calculating unit for calculating the blind spot region of the vehicle (2) located at the predicted position;
an image extracting unit (3) adapted for extracting an image from the captured image based on the travelling state of the vehicle (2), the extracted image corresponding to the calculated blind spot region of the vehicle (2) after the predetermined period of time; and
an image outputting unit (3) adapted for outputting the extracted image.

2. The driving support device according to claim 1, wherein
the predetermined period of time is a period of time from when the image of the peripheral environments is captured by the imaging unit (4) to when the captured image is output by the image outputting unit (3).

3. The driving support device according to claim 1 or 2, wherein
the image extracting unit (3) is adapted for extracting the image corresponding to the blind spot region generated by a pillar (12) of the vehicle (2); and
the image outputting unit (3) is adapted for outputting the extracted image to display on an interior surface of the pillar (12) of the vehicle (2).

4. A driving support method, comprising:
an imaging step (S1) capturing an image of peripheral environments of a vehicle (2);
a travelling state obtaining step (S2, S3) obtaining a travelling state of the vehicle (2) based on a step of detecting a vehicle direction and either a moving distance or a vehicle speed of the vehicle by a sensor (9,10,11) installed on the vehicle;
**characterized by**;
a position predicting step predicting a position of the vehicle (2) located after a predetermined period of time based on the travelling state of the vehicle (2); and
a blind spot region calculating step calculating the blind spot region of the vehicle (2) located at the predicted position;
an image extracting step (S4, S5) extracting an image from the captured image based on the obtained travelling state of the vehicle (2), the extracted image corresponding to the calculated blind spot region of the vehicle (2) after the predetermined period of time; and
an image outputting step (S7) outputting the extracted image.

5. The method according to claim 4, wherein
the predetermined period of time is a period of time from when the image of the peripheral environments is captured by the imaging step (S1) to when the captured image is output by the image outputting step (S7).

6. The method according to claim 4 or 5, wherein
the image extracting step (S4, S5) extracts the image corresponding to the blind spot region generated by a pillar (12) of the vehicle (2); and
the image outputting step (S⁷) outputs the extracted image to display on an interior surface of the pillar (12) of the vehicle (2).

7. A computer program that is stored on a computer and when executed by the computer causes the computer to perform the method according to any one of claims 4 to 6.

## Patentansprüche

1. Antriebsunterstützungsvorrichtung mit:
einer Bildgebungseinheit (4), die angepasst ist zum Erfassen eines Bilds einer peripheren Umgebung eines Fahrzeugs (2);
einer Fahrzustanderlangungseinheit (3), die angepasst ist zum Erlangen eines Fahrzustands des Fahrzeugs (2) basierend auf einem Sensor (9, 10, 11) zum Detektieren einer Fahrzeugrichtung und entweder einer Bewegungsdistanz oder einer Fahrzeuggeschwindigkeit des Fahrzeugs (2), wobei der Sensor (9, 10, 11) auf dem Fahrzeug (2) installiert ist;
**gekennzeichnet durch**
eine Positionsvorhersageeinheit zum Vorhersagen einer Position des Fahrzeugs (2), die nach einer vorbestimmten Zeitperiode vorliegt, basierend auf dem Fahrzustand des Fahrzeugs (2);
eine Berechnungseinheit für eine tote Winkelregion zum Berechnen der toten Winkelregion des Fahrzeugs (2), das sich an der vorausgesagten Position befindet;
eine Bildextraktionseinheit (3) zum Extrahieren eines Bilds aus dem erfassten Bild basierend auf dem Fahrzustand des Fahrzeugs (2), wobei das extrahierte Bild der berechneten toten Winkelregion des Fahrzeugs (2) nach der vorbestimmten Zeitperiode entspricht; und
eine Bildausgabeeinheit (3), die angepasst ist zum Ausgeben des extrahierten Bilds.

2. Antriebsunterstützungsvorrichtung nach Anspruch 1, bei der
die vorbestimmte Zeitperiode eine Zeitperiode ist, die beginnt, wenn das Bild der peripheren Umgebung durch die Bildgebungseinheit (4) erfasst wird, und endet, wenn das erfasste Bild durch die Bildausgabeeinheit (3) ausgegeben wird.

3. Antriebsunterstützungsvorrichtung nach Anspruch 1 oder 2, bei der
die Bildextraktionseinheit (3) angepasst ist zum Extrahieren des Bilds, das der toten Winkelregion, die durch eine Säule (12) des Fahrzeugs (2) erzeugt wird, entspricht; und
die Bildausgabeeinheit (3) angepasst ist zum Ausgeben des extrahierten Bilds zur Anzeige auf einer Innenfläche der Säule (12) des Fahrzeugs (2).

4. Fahrunterstützungsverfahren mit:
einem Bildgebungsschritt (S1), der ein Bild einer peripheren Umgebung eines Fahrzeugs (2) erfasst;
einem Fahrzustanderlangungsschritt (S2, S3), der einen Fahrzustand des Fahrzeugs (2) basierend auf einem Schritt zum Detektieren einer Fahrzeugrichtung und entweder einer Bewegungsdistanz oder einer Fahrzeuggeschwindigkeit des Fahrzeugs durch einen Sensor (9, 10, 11) erlangt, der auf dem Fahrzeug installiert ist,
**gekennzeichnet durch**
einen Positionsvoraussageschritt, der eine Position des Fahrzeugs (2), die nach einer vorbestimmten Zeitperiode vorliegt, basierend auf dem Fahrzustand des Fahrzeugs (2) voraussagt; und
einen Berechnungsschritt für eine tote Winkelregion, der die tote Winkelregion des Fahrzeugs (2) berechnet, das sich an der vorausgesagten Position befindet;
einen Bildextraktionsschritt (S4, S5), der ein Bild aus dem erfassten Bild basierend auf dem erlangten Fahrzustand des Fahrzeugs (2) extrahiert, wobei das extrahierte Bild der berechneten toten Winkelregion des Fahrzeugs (2) nach der vorbestimmten Zeitperiode entspricht; und
einen Bildausgabeschritt (S7), der das extrahierte Bild ausgibt.

5. Verfahren nach Anspruch 4, bei dem
die vorbestimmte Zeitperiode eine Zeitperiode ist, die beginnt, wenn das Bild der peripheren Umgebung durch den Bildgebungsschritt (S1) erfasst wird, und endet, wenn das erfasste Bild durch den Bildausgabeschritt (S7) ausgegeben wird.

6. Verfahren nach Anspruch 4 oder 5, bei dem
der Bildextraktionsschritt (S4, S5) das Bild extrahiert, das der toten Winkelregion entspricht, die durch eine Säule (12) des Fahrzeugs (2) erzeugt wird; und
der Bildausgabeschritt (S7) das extrahierte Bild ausgibt zur Anzeige auf einer Innenfläche der Säule (12) des Fahrzeugs (2).

7. Computerprogramm, das auf einem Computer gespeichert ist und, wenn es durch den Computer ausgeführt wird, den Computer veranlasst das Verfahren gemäß einem der Ansprüche 4 bis 6 durchzuführen.

## Revendications

1. Dispositif de support de commande, comprenant :
une unité d'imagerie (4) adaptée pour capturer une image d'environnements périphériques d'un véhicule (2) ;
une unité d'obtention d'état de déplacement (3) adaptée pour obtenir un état de déplacement du véhicule (2) en se basant sur un capteur (9, 10,11) détectant une direction du véhicule et soit une distance de déplacement ou soit une vitesse du véhicule (2) ; le capteur étant monté sur le véhicule (2) ;
**caractérisé par**
une unité de prédiction de position pour prédire une position du véhicule (2) située après une période de temps prédéterminée sur la base de l'état de déplacement du véhicule (2) ;
une unité de calcul de région d'angle mort du véhicule (2) située dans la position prédite ;
une unité d'extraction d'image (3) adaptée pour extraire une image de l'image capturée sur la base de l'état de déplacement du véhicule (2), l'image extraite correspondant à la région d'angle mort calculée du véhicule (2) après la période de temps prédéterminée ; et
une unité de délivrance d'image (3) adaptée pour délivrer l'image extraite.

2. Dispositif de support de commande selon la revendication 1, dans lequel :
la période de temps prédéterminée est une période de temps allant de l'instant où l'image des environnements périphériques est capturée par l'unité d'imagerie (4) à l'instant où l'image capturée est délivrée par l'unité de délivrance d'image (3).

3. Dispositif de support de commande selon la revendication 1 ou 2, dans lequel :
l'unité d'extraction d'image (3) est adaptée pour extraire l'image correspondant à la région d'angle mort générée par une colonne (12) du véhicule (2) ; et
l'unité de délivrance d'image (3) est adaptée pour délivrer l'image extraite pour y afficher une surface extérieure de la colonne (12) du véhicule (2).

4. Procédé de support de commande, comprenant :
une étape d'imagerie (S1) capturant une image d'environnements périphériques d'un véhicule (2) ;
une étape d'obtention d'état de déplacement (S2, S3) obtenant un état de déplacement du véhicule (2) sur la base d'une étape de détection d'une direction de véhicule et soit une distance de déplacement soit une vitesse du véhicule par un capteur (9, 10, 11) étant monté sur le véhicule;
**caractérisé par**
une étape de prédiction de position prédisant une position du véhicule (2) située après une période de temps prédéterminée sur la base de l'état de déplacement du véhicule (2) ; et
une étape de calcul d'angle mort du véhicule (2) situé dans la position prédite ;
une étape d'extraction d'image (S4, S5) extrayant une image de l'image capturée sur la base de l'état de déplacement obtenu du véhicule (2), l'image extraite correspondant à la région d'angle mort calculée du véhicule (2) après la période de temps prédéterminée ; et
une étape de délivrance d'image (S7) délivrant l'image extraite.

5. Procédé selon la revendication 4, dans lequel :
la période de temps prédéterminée est une période de temps allant de l'instant où l'image des environnements périphériques est capturée par l'étape d'imagerie (S1) à l'instant où l'image capturée est délivrée par l'étape de délivrance d'image (S7).

6. Procédé selon la revendication 4 ou 5, dans lequel :
l'étape d'extraction d'image (S4, S5) extrait l'image correspondant à la région d'angle mort générée par une colonne (12) du véhicule (2) ; et
l'étape de délivrance d'image (S7) délivre l'image extraite pour y afficher une surface intérieure de la colonne (12) du véhicule (2).

7. Programme informatique qui est stocké sur un ordinateur et qui, une fois exécuté par l'ordinateur, amène l'ordinateur à effectuer le procédé selon l'une quelconque des revendications 4 à 6.
